# EUROPEAN PATENT SPECIFICATION

(11) **EP 3 425 981 B1**
(45) Date of publication and mention of the grant of the patent: **16.12.2020**
(21) Application number: 17773266.6
(22) Date of filing: 30.03.2017
(51) Int. Cl.: H04W 72/04, H04L 5/00, H04L 1/00

(54) **RESOURCE ALLOCATION METHOD AND NETWORK DEVICE**
RESSOURCENZUTEILUNGSVERFAHREN UND NETZWERKVORRICHTUNG
PROCÉDÉ D'ATTRIBUTION DE RESSOURCES ET DISPOSITIF DE RÉSEAU

(30) Priority: 31.03.2016 CN 201610196510
(43) Date of publication of application: 09.01.2019
(73) Proprietor: Huawei Technologies Co., Ltd., Longgang District Shenzhen, Guangdong 518129 (CN)
(72) Inventor: ZHANG, Yi, Shenzhen Guangdong 518129 (CN); TANG, Zhenfei, Shenzhen Guangdong 518129 (CN)
(74) Representative: Pfenning, Meinig & Partner mbB
(86) International application number: PCT/CN2017/078842
(87) International publication number: WO 2017/167236

(56) References cited:
- CN-A- 102 970 757
- CN-A- 103 298 126
- CN-A- 103 384 406
- US-A1- 2013 301 524
- US-A1- 2014 162 667
- US-A1- 2016 088 652

## Description

### TECHNICAL FIELD

The present invention relates to the field of communications technology, and in particular, to a resource allocation method and a network device.

### BACKGROUND

Ultra-reliable and low latency communication (Ultra-reliable and low latency communication) such as ultra-reliable machine-type communication (ultra-reliable Machine-Type Communication, uMTC) is a service defined by the International Telecommunication Union (International Telecommunication Union, ITU) in the 5th generation (5-Generation, 5G) mobile communications technology. To ensure that uMTC service burst data meets an end-to-end (End 2 End, E2E) latency requirement, when uMTC service data is sent, a large quantity of resources need to be allocated to the uMTC service data. Therefore, when uMTC service data needs to be sent, if no idle resource is allocated to the uMTC service data, the uMTC service data cannot be sent in time. Consequently, a latency requirement of the uMTC service data cannot be met.

US 2013/301524 A1 discloses a narrow bandwidth within a wide system bandwidth is allocated for communicating data related to MTC. MTC control data generated for communicating over one or more MTC control channels for an MTC UE within the narrow bandwidth is transmitted over the one or more MTC control channels.

### SUMMARY

The present invention is as defined in the appended independent claims. In the following description, any embodiment(s) referred to and not falling within the scope of the appended claims, is (are) merely example(s) useful to the understanding of the invention.

Embodiments of the present invention disclose a resource allocation method and a network device, to ensure that service data having a low latency and high reliability requirement is sent in time.

A first aspect discloses a resource allocation method, and the method is applied to a network device supporting a first service and a second service. When there is to-be-sent first service data, resources are allocated to the to-be-sent first service data. The resources may include a first resource that is allowed to be preempted by second service data. The resources may be resource elements (Resource Element, RE), resource blocks (Resource Block, RB), frequency resources, or symbols (symbol). Therefore, when there is to-be-sent second service data, the to-be-sent second service data may be sent by using the first resource. This can ensure that the data belonging to the second service is sent in time. In addition, when there is no to-be-sent second service data, the first resource may be used to send the to-be-sent first service data. This can improve a transmission rate of the first service data.

Optionally, the first service may include an MBB (Mobile Broadband, mobile broadband) service, and the second service may include a uMTC service.

In an embodiment, indication information may be sent by using a system message (such as a broadcast message), a radio resource control (Radio Resource Control, RRC) message, or a downlink control channel (such as a physical downlink control channel (Physical Downlink Control Channel, PDCCH)). The indication information may indicate a resource that is in a subframe carrying the to-be-sent first service data or in a transmission time interval (Transmission Time Interval, TTI) carrying the to-be-sent first service data and that belongs to the first resource. User equipment (User Equipment, UE) receiving the to-be-sent first service data may determine, based on the indication information, a location of a resource that may be preempted in the resources. When data in the resources is decoded, decoded data received by using the first resource is not directly used as the to-be-sent first service data. Instead, whether this part of data is the to-be-sent first service data needs to be further determined. This can avoid data obfuscation. In addition, when there is the to-be-sent second service data, UE receiving the to-be-sent second service data may determine, based on the indication information, a location and/or a length of a resource that is in the resources and that may be used to send the to-be-sent second service data, and may directly decode the to-be-sent second service data from data received by using the first resource, so that data decoding efficiency and UE processing efficiency can be improved.

In an embodiment, the resources may further include a second resource that is not allowed to be preempted by the second service data. After the resources are allocated to the to-be-sent first service data, a part of data may be selected, from the to-be-sent first service data, as first data according to a preset rule, and the first data is mapped to the second resource, so as to send the first data by using the second resource. This can ensure sending of the to-be-sent first service data, thereby reducing an impact, on the sending of the first service data, caused when the second service data preempts the resource.

In an embodiment, when there is the to-be-sent second service data, the to-be-sent second service data is mapped to the first resource, and the to-be-sent second service data is sent by using the first resource. The second service data can be sent in time by preempting the resource, so that a latency requirement of the second service data is met.

In an embodiment, after the resources are allocated to the to-be-sent first service data, the to-be-sent first service data may be first divided into M blocks, encoding processing is performed on each block, and rate matching is performed on the encoded block. Then, the part of data is selected, from the to-be-sent first service data, as the first data according to the preset rule. The to-be-sent first service data can be protected in a process of transmitting the to-be-sent first service data. M is an integer greater than 1.

In an embodiment, when the part of data is selected, from the to-be-sent first service data, as the first data according to the preset rule, a part of data may be first selected, from the rate-matched block, as second data according to the preset rule, and M pieces of second data are cascaded into the first data in order of the to-be-sent first service data. M is an integer greater than 1. System bits (bit) or important information bits in all the blocks may be cascaded into the first data, so that the UE receiving the to-be-sent first service data can correctly decode the first service data by using the system bits or the important information bits. In this way, parity bits or redundancy bits in the blocks can be mapped, to the greatest extent, to the second resource that is not allowed to be preempted, so that an impact caused by preemption on transmission of the first service data can be reduced.

In an embodiment, when the part of data is selected, from the rate-matched block, as the second data according to the preset rule, a capacity of the second resource may be first obtained, and a first length may be obtained by dividing the capacity of the second resource by M. Then, for each rate-matched block, a part of data that is in the block and whose length is the first length is determined as the second data.

A second aspect discloses a resource allocation method, the method is applied to a network device supporting a first service and a second service, the first service may include an MBB service, and the second service may include a uMTC service. When there is to-be-sent first service data, resources are allocated to the to-be-sent first service data, and indication information is sent by using a system message, an RRC message, or a downlink control channel. The resources may include a first resource that is allowed to be preempted by second service data. The resources may be REs, RBs, or symbols. The indication information may indicate an identifier of a resource that is in a subframe carrying the to-be-sent first service data or in a TTI carrying the to-be-sent first service data and that belongs to the first resource. Therefore, when there is to-be-sent second service data, the to-be-sent second service data may be sent by using the first resource. This can ensure that data of the uMTC service belonging to the second service is sent in time. In addition, UE receiving the to-be-sent second service data may determine, based on the indication information, a location and/or a length of a resource that is in the resources and that may be used to send the to-be-sent second service data, and may directly decode the to-be-sent second service data from data received by using the first resource, so that data decoding efficiency and UE processing efficiency can be improved. Further, UE receiving the to-be-sent first service data may determine, based on the indication information, a location of a resource that may be preempted in the resources. When data in the resources is decoded, decoded data received by using the first resource is not directly used as the to-be-sent first service data. Instead, whether this part of data is the to-be-sent first service data needs to be further determined. This can avoid data obfuscation.

A third aspect discloses a network device, and the network device includes units configured to perform the resource allocation method disclosed in any one of the first aspect or the possible implementations of the first aspect, or the resource allocation method disclosed in the second aspect.

A fourth aspect discloses a network device, and the network device includes a processor, a memory, and a transceiver. The memory is configured to store a group of program code, the processor is configured to execute the program code stored in the memory, and the transceiver is configured to communicate, under the control of the processor, with UE or the like. When executing the program code stored in the memory, the processor may perform, based on the program code stored in the memory, the resource allocation method disclosed in any one of the first aspect or the possible implementations of the first aspect, or the resource allocation method disclosed in the second aspect.

A fifth aspect discloses a readable storage medium, and the readable storage medium stores program code used by a network device to perform the resource allocation method disclosed in any one of the first aspect or the possible implementations of the first aspect, or the resource allocation method disclosed in the second aspect.

A sixth aspect discloses a data transmission method, the method is applied to UE supporting a first service, the first service may include an MBB service, and the method includes:
receiving indication information by using a system message, an RRC message, or a downlink control channel, where the indication information is used to indicate a resource carrying first service data in a subframe or in a TTI, the resource is an RE, an RB, a frequency resource, or a symbol, and the resource is a part of resources allocated by a network device to the first service data;
receiving the first service data by using the resource; and
decoding the received first service data. The UE may receive and decode corresponding data based on indication information, so that data decoding efficiency and UE processing efficiency can be improved.

A seventh aspect discloses a data transmission method, the method is applied to UE supporting a second service, the second service may include a uMTC service, and the method includes:
receiving indication information by using a system message, an RRC message, or a downlink control channel, where the indication information is used to indicate a resource carrying second service data in a subframe or in a TTI, the resource is an RE, an RB, a frequency resource, or a symbol, the resource is a resource preempted by the second service data in resources allocated by a network device to first service data, and the first service may include an MBB service;
receiving the second service data by using the resource; and
decoding the received second service data. The UE may receive and decode corresponding data based on indication information, so that data decoding efficiency and UE processing efficiency can be improved. The UE supporting the first service and the UE supporting the second service may be same UE, or may be different UEs.

An eighth aspect discloses UE, and the UE includes units configured to perform the data transmission method disclosed in the sixth aspect or the seventh aspect.

A ninth aspect discloses UE, and the UE includes a processor, a memory, and a receiver. The memory is configured to store a group of program code, the processor is configured to execute the program code stored in the memory, and the receiver is configured to communicate, under the control of the processor, with a network device or the like. When executing the program code stored in the memory, the processor may perform, based on the program code stored in the memory, the data transmission method disclosed in the sixth aspect or the seventh aspect.

A tenth aspect discloses a readable storage medium, and the readable storage medium stores program code used by UE to perform the data transmission method disclosed in the sixth aspect or the seventh aspect.

In the embodiments of the present invention, when resources are allocated to data of a first service including an MBB service, the resources include a resource that is allowed to be preempted by data of a second service including a uMTC service. An available resource for the second service can be ensured at any time, so as to ensure that service data having a low latency and high reliability requirement is sent in time.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a resource allocation network architecture according to an embodiment of the present invention;
FIG. 2 is a schematic diagram of an air interface resource according to an embodiment of the present invention;
FIG. 3 is a schematic flowchart of a resource allocation method according to an embodiment of the present invention;
FIG. 4 is a schematic structural diagram of a network device according to an embodiment of the present invention;
FIG. 5 is a schematic structural diagram of another network device according to an embodiment of the present invention;
FIG. 6 is a schematic structural diagram of still another network device according to an embodiment of the present invention;
FIG. 7 is a schematic flowchart of a data transmission method according to an embodiment of the present invention;
FIG. 8 is a schematic structural diagram of UE according to an embodiment of the present invention;
FIG. 9 is a schematic structural diagram of another UE according to an embodiment of the present invention;
FIG. 10 is a schematic flowchart of another data transmission method according to an embodiment of the present invention;
FIG. 11 is a schematic structural diagram of still another UE according to an embodiment of the present invention; and
FIG. 12 is a schematic structural diagram of still another UE according to an embodiment of the present invention.

### DESCRIPTION OF EMBODIMENTS

The following describes the technical solutions in the embodiments of the present invention with reference to the accompanying drawings in the embodiments of the present invention.

The embodiments of the present invention disclose a resource allocation method and a network device, to ensure that service data having a low latency and high reliability requirement is sent in time. Details are separately described in the following.

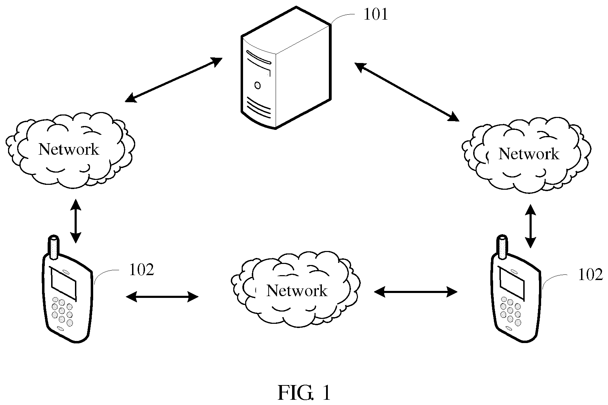

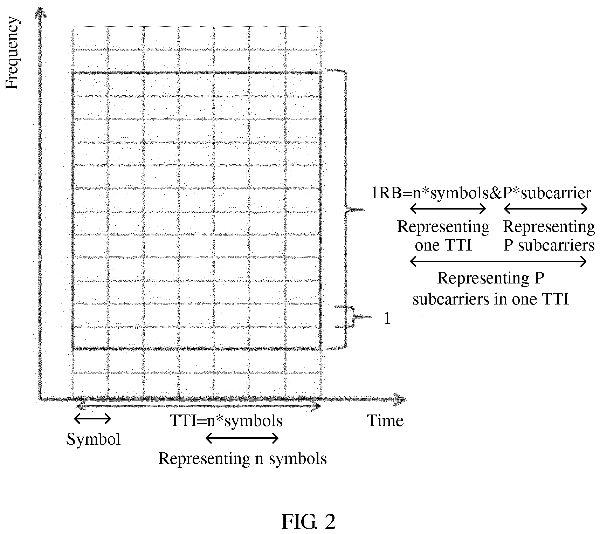

To better understand the resource allocation method and the network device disclosed in the embodiments of the present invention, the following first describes a network architecture used in the embodiments of the present invention. Referring to FIG. 1, FIG. 1 is a schematic diagram of a resource allocation network architecture according to an embodiment of the present invention. As shown in FIG. 1, the resource allocation network architecture may include at least one network device 101 and at least one user equipment UE 102. The network device 101 may be an evolved NodeB (evolved Node Base, eNB). The UE 102 may be a mobile phone. The network device 101 may support a first service such as an MBB service, and support a second service such as a uMTC service. The network device 101 is connected to the UE 102 by using a network. The network device 101 may send MBB service data and uMTC service data to same UE 102 or different UEs by using the network, and may also receive MBB service data and uMTC service data sent by the UE 102 by using the network. Network devices 101 are connected to each other by using a network, and may communicate with each other by using the network. UEs 102 are connected to each other by using a network, and may communicate with each other by using the network. A resource used by the network device 101 to send data is an air interface resource, which is a time domain and frequency domain resource on an air interface. The air interface resource is divided into subcarriers (subcarrier) in frequency domain, and is divided into symbols (symbol) in time domain. Referring to FIG. 2, FIG. 2 is a schematic diagram of an air interface resource according to an embodiment of the present invention. As shown in FIG. 2, a time domain (time) is a horizontal axis. A frequency domain (Freq) is a vertical axis. The air interface resource includes a frequency domain resource and a time domain resource. One grid is one resource element RE, and represents a resource on a subcarrier in a symbol time. Each RE may carry information of a specific capacity. One TTI includes n symbols in terms of time, and P subcarriers in one TTI are combined into one resource block RB, where n and P are positive integers. FIG. 1 shows only one network device 101 and two UEs 102, and this may not be limited in an actual application scenario.

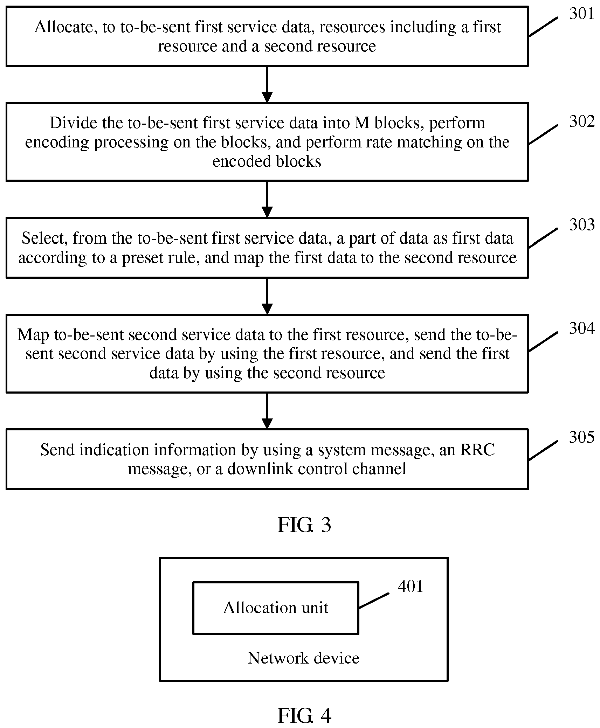

Based on the resource allocation network architecture shown in FIG. 1, referring to FIG. 3, FIG. 3 is a schematic flowchart of a resource allocation method according to an embodiment of the present invention. The resource allocation method is described from the perspective of the network device 101. As shown in FIG. 3, the resource allocation method may include the following steps.

301. Allocate, to to-be-sent first service data, resources including a first resource and a second resource.

In this embodiment, when first service data, to be specific, the to-be-sent first service data, is sent to first UE, the resources are allocated to the to-be-sent first service data. The resources may include the first resource that is allowed to be preempted by second service data. When to-be-sent second service data needs a resource, the first resource is preempted by the to-be-sent second service data. In other words, the first resource is used to send the to-be-sent second service data. When no to-be-sent second service data needs a resource, the first resource is used to send the to-be-sent first service data, so as to properly use the first resource. The resources may further include the second resource that is not allowed to be preempted by the second service data. In other words, the second resource can be used only to send the to-be-sent first service data, and cannot be used to send the to-be-sent second service data. The to-be-sent first service data may be any to-be-sent first service data in the network device. The resources are idle resources or resources that are not used, and may be idle REs, RBs, frequency resources (such as subcarriers), or symbols. A capacity of the resources may be greater than or equal to a length of the to-be-sent first service data when there are enough resources that can be allocated to the to-be-sent first service data, so that the to-be-sent first service data can be sent to the first UE by using the resource. A capacity of the resources may be less than a length of the to-be-sent first service data when there are not enough resources that can be allocated to the to-be-sent first service data. In both cases, a system bit (bit) or an important information bit in the to-be-sent first service data can be sent to the first UE.

302. Divide the to-be-sent first service data into M blocks, perform encoding processing on the blocks, and perform rate matching on the encoded blocks.

In this embodiment, to protect data, before the to-be-sent first service data is sent to the first UE, encoding processing needs to be first performed on the to-be-sent first service data. An encoding manner may be turbo encoding, or may be convolutional encoding. However, because a maximum quantity of bits of data that can be encoded each time through turbo encoding and convolutional encoding is 6144, when the length of the to-be-sent first service data is relatively long, or when a quantity of bits of the to-be-sent first service data is greater than 6144, the to-be-sent first service data needs to be divided into the M blocks. The M blocks may be the same or different in data length, but each block needs to include a system bit or an important information bit. Because a total length of the M encoded blocks may be greater than the capacity of the resources, rate matching is performed on the encoded blocks. When the total length of the M encoded blocks is greater than the capacity of the resources, it indicates that the resources can carry only a part of data in the to-be-sent first service data, and rate matching processing is performed on the M encoded blocks, so that a total length of the M rate-matched blocks is equal to the capacity of the resources. When the length of the M encoded blocks is not greater than the capacity of the resources, processing may not be performed. M is an integer greater than 1.

303. Select, from the to-be-sent first service data, a part of data as first data according to a preset rule, and map the first data to the second resource.

In this embodiment, after rate matching is performed on the to-be-sent first service data, or after rate matching is performed on the M blocks, because the first resource may be preempted by the second service data, the part of data may be selected, from the to-be-sent first service data, as the first data according to the preset rule, to be specific, a part of data on a system bit or an important information bit is selected, from the to-be-sent first service data, as the first data, and the first data is mapped to the second resource. This can ensure that the first data can be sent to the first UE by using the second resource, so as to ensure that important data in the to-be-sent first service data can be sent to the first UE by using the second resource.

In a possible implementation, when the part of data is selected, from the to-be-sent first service data, as the first data according to the preset rule, a part of data may be selected, from each rate-matched block, as second data according to the preset rule. The second data may include a system bit or an important information bit in the block. Then, M pieces of second data are cascaded into the first data in order of the to-be-sent first service data. M is an integer greater than 1.

In a possible implementation, when the part of data is selected, from the rate-matched block, as the second data according to the preset rule, a capacity of the second resource may be first obtained, and a first length may be obtained by dividing the capacity of the second resource by M. Then, for each rate-matched block, a part of data that is in the block and whose length is the first length may be determined as the second data. This can ensure that a capacity of the selected first data is equal to the capacity of the second resource, so that the second resource can be properly used.

For example, it is assumed that a sequence generated for each rate-matched block is *eᵣₖ,* where *r* = 0,..., *C*-1, C represents a quantity of blocks, *k* = 0,..., *Eᵣ*-1, and *Eᵣ* represents a length of each rate-matched block. If a length of a data bit that can be transmitted by using the second resource that is not allowed to be preempted by uMTC service data is N1, a length of the first data *k*₁ = *N*1/*C*, in other words, the length of the first data is obtained by dividing the capacity of the second resource by the quantity of blocks.

304. Map to-be-sent second service data to the first resource, send the to-be-sent second service data by using the first resource, and send the first data by using the second resource.

In this embodiment, when the to-be-sent second service data that needs to be sent to second UE exists in the network device, if there is no idle resource, or if an idle resource does not meet a condition of sending the to-be-sent second service data, the to-be-sent second service data preempts the resources allocated to the to-be-sent first service data. Because the second resource in the resources is not allowed to be preempted, the to-be-sent second service data preempts the first resource, to be specific, the to-be-sent second service data is mapped to the first resource. When a length of the to-be-sent second service data is not less than a capacity of the first resource, all the first resource is used to carry the to-be-sent second service data, and data other than the first data in the to-be-sent first service data may be saved, or may be discarded. This part of data may be sent to the first UE next time. When a length of the to-be-sent second service data is less than a capacity of the first resource, in addition to the to-be-sent second service data, the first resource may further carry third data, which is selected from data other than the first data in the to-be-sent first service data. A sum of a length of the third data and the length of the to-be-sent second service data is equal to the capacity of the first resource, so that utilization of the first resource can be improved.

In this embodiment, after the part of data is selected, from the rate-matched block, as the second data, data other than the second data in the rate-matched block may be determined as fourth data, and M pieces of fourth data are cascaded into fifth data. When there is no to-be-sent second service data, the fifth data is mapped to the first resource. When there is the to-be-sent second service data, and the capacity of the first resource is greater than the length of the to-be-sent second service data, the third data may be selected from the fifth data, and the third data is mapped to a part of the first resource that is not occupied by the to-be-sent second service data, so that the first resource is properly used, thereby improving resource utilization. The M pieces of fourth data may be cascaded into the fifth data in order of the to-be-sent first service data, or the M pieces of fourth data may be cascaded into the fifth data in reverse order of the to-be-sent first service data. After the fifth data is mapped to the first resource or in a process of mapping the fifth data to the first resource, when there is the to-be-sent second service data, if a mapping rule of the first resource is that mapping starts from an initial location, and the capacity of the first resource is greater than the length of the to-be-sent second service data, the to-be-sent second service data replaces a previous part of the fifth data mapped to the first resource. Because data in a later part is usually considered as important data, the important third data that is in a later part of the fifth data and that is mapped to the first resource can be retained.

305. Send indication information by using a system message, an RRC message, or a downlink control channel.

In this embodiment, after the first resource in the resources is preempted by the to-be-sent second service data, the network device may send the indication information to the first UE and/or the second UE by using the system message, the RRC message, or the downlink control channel, so that the first UE and/or the second UE may determine, based on the indication information, a resource that is in a subframe carrying the to-be-sent first service data or in a TTI carrying the to-be-sent first service data and that belongs to the first resource, to be specific, determine a location of the first resource in the resources. In this way, the second UE decodes the to-be-sent second service data from the first resource, and the first UE parses the first service data from the second resource and parses, from the first resource, data belonging to the to-be-sent first service data. This can improve processing efficiency of the first UE and the second UE. The first UE and the second UE may be same UE, or may be different UEs.

In all the embodiments of the present invention, an example in which a first service is an MBB service, and a second service is a uMTC service is used for description. It may be understood that, the embodiments of the present invention may also be applied to another first service and another second service, to transmit second service data in time.

In the resource allocation method described in FIG. 3, when resources are allocated to data of a first service including an MBB service, the resources include a resource that is allowed to be preempted by data of a second service including a uMTC service. An available resource for the second service can be ensured at any time, so as to ensure that service data having a low latency and high reliability requirement is sent in time.

Based on the resource allocation network architecture shown in FIG. 1, referring to FIG. 4, FIG. 4 is a schematic structural diagram of a network device according to an embodiment of the present invention. As shown in FIG. 4, the network device may include:
an allocation unit 401, configured to allocate resources to to-be-sent first service data, where the resources may include a first resource, the first resource is a resource that is allowed to be preempted by second service data, and the resources are REs, RBs, frequency resources, or symbols.

In the network device described in FIG. 4, when resources are allocated to data of a first service including an MBB service, the resources include a resource that is allowed to be preempted by data of a second service including a uMTC service. An available resource for the second service can be ensured at any time, so as to ensure that service data having a low latency and high reliability requirement is sent in time.

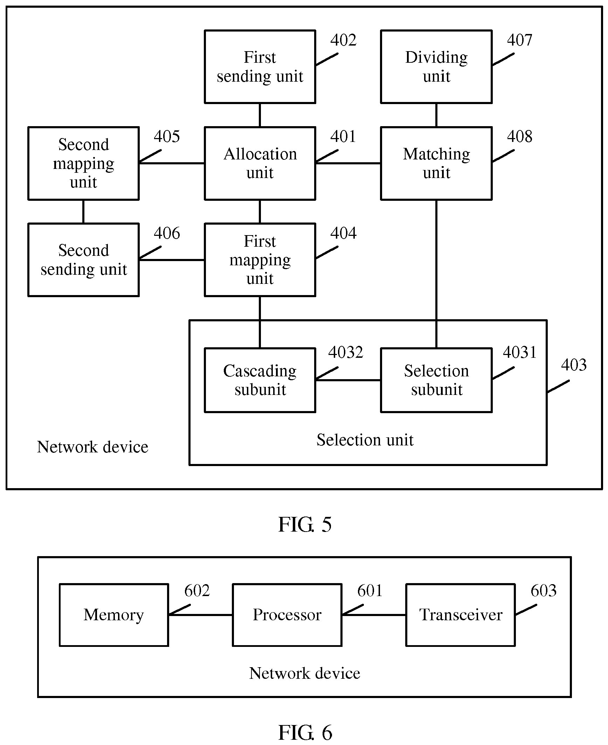

Based on the resource allocation network architecture shown in FIG. 1, referring to FIG. 5, FIG. 5 is a schematic structural diagram of another network device according to an embodiment of the present invention.

The network device may further include:
a first sending unit 402, configured to send indication information by using a system message, an RRC message, or a downlink control channel, where the indication information is used to indicate a resource that is in a subframe or in a TTI and that belongs to the first resource allocated by the allocation unit 401.

The subframe or the TTI is used to carry the to-be-sent first service data.

In a possible implementation, the resources may further include a second resource, and the second resource is a resource that is not allowed to be preempted by the second service data.

The network device may further include:
a selection unit 403, configured to select, from the to-be-sent first service data, a part of data as first data according to a preset rule; and
a first mapping unit 404, configured to map the first data selected by the selection unit 403 to the second resource allocated by the allocation unit 401.

In a possible implementation, the network device may further include:
a second mapping unit 405, configured to map to-be-sent second service data to the first resource allocated by the allocation unit 401; and
a second sending unit 406, configured to: send, by using the first resource, the to-be-sent second service data mapped by the second mapping unit 405, and send, by using the second resource, the first data mapped by the first mapping unit 404.

In a possible implementation, the network device may further include:
a dividing unit 407, configured to divide the to-be-sent first service data into M blocks, where M is an integer greater than 1; and
a matching unit 408, configured to: for each block, perform encoding processing on the block obtained through division by the dividing unit 407, and perform rate matching on the encoded block.

Specifically, for each block, the matching unit 408 performs encoding processing on the block obtained through division by the dividing unit 407, and performs, based on a capacity of the resources allocated by the allocation unit 401, rate matching on the encoded block.

In a possible implementation, the selection unit 403 may include:
a selection subunit 4031, configured to: for each block, select, from the block rate-matched by the matching unit 408, a part of data as second data according to the preset rule; and
a cascading subunit 4032, configured to cascade, into the first data in order of the to-be-sent first service data, M pieces of second data selected by the selection subunit 4031.

In a possible implementation, the selection subunit 4031 may be configured to:
obtain a capacity of the second resource;
divide the capacity of the second resource by M, to obtain a first length; and
for each rate-matched block, determine, as the second data, a part of data that is in the block and whose length is the first length.

In the network device described in FIG. 5, when resources are allocated to data of a first service including an MBB service, the resources include a resource that is allowed to be preempted by data of a second service including a uMTC service. A transmission resource for the second service can be ensured at any time, so as to ensure that service data having a low latency and high reliability requirement is sent in time.

Based on the resource allocation network architecture shown in FIG. 1, referring to FIG. 6, FIG. 6 is a schematic structural diagram of still another network device according to an embodiment of the present invention. As shown in FIG. 6, the network device includes a processor 601, a memory 602, and a transceiver 603.

The memory 602 stores a group of program code, and the processor 601 is configured to invoke the program code stored in the memory 602 to perform the following operation:
allocating resources to to-be-sent first service data, where the resources may include a first resource, the first resource is a resource that is allowed to be preempted by second service data, and the resources are REs, RBs, frequency resources, or symbols.

In a possible implementation, the transceiver 603 is configured to send indication information by using a system message, an RRC message, or a downlink control channel, where the indication information is used to indicate a resource that is in a subframe or in a TTI and that belongs to the first resource.

The subframe or the TTI is used to carry the to-be-sent first service data.

In a possible implementation, the resources may further include a second resource, and the second resource is a resource that is not allowed to be preempted by the second service data.

The processor 601 is further configured to invoke the program code stored in the memory 602 to perform the following operations:
selecting, from the to-be-sent first service data, a part of data as first data according to a preset rule; and
mapping the first data to the second resource.

In a possible implementation, the processor 601 is further configured to invoke the program code stored in the memory 602 to perform the following operation:
mapping to-be-sent second service data to the first resource.

The transceiver 603 is further configured to send the to-be-sent second service data by using the first resource.

In a possible implementation, before the processor 601 selects, from the to-be-sent first service data, the part of data as the first data according to the preset rule, the processor is further configured to invoke the program code stored in the memory 602 to perform the following operations:
dividing the to-be-sent first service data into M blocks, where M is an integer greater than 1; and
for each block, performing encoding processing on the block, and performing rate matching on the encoded block.

In a possible implementation, that the processor 601 selects, from the to-be-sent first service data, the part of data as the first data according to the preset rule includes:
for each block, selecting, from the rate-matched block, a part of data as second data according to the preset rule; and
cascading M pieces of second data into the first data in order of the to-be-sent first service data.

In a possible implementation, that the processor 601 selects, from the rate-matched block, the part of data as the second data according to the preset rule includes:
obtaining a capacity of the second resource;
dividing the capacity of the second resource by M, to obtain a first length; and
for each rate-matched block, determining, as the second data, a part of data that is in the block and whose length is the first length.

In the network device described in FIG. 6, when resources are allocated to data of a first service including an MBB service, the resources include a resource that is allowed to be preempted by data of a second service including a uMTC service. A transmission resource for the second service can be ensured at any time, so as to ensure that service data having a low latency and high reliability requirement is sent in time.

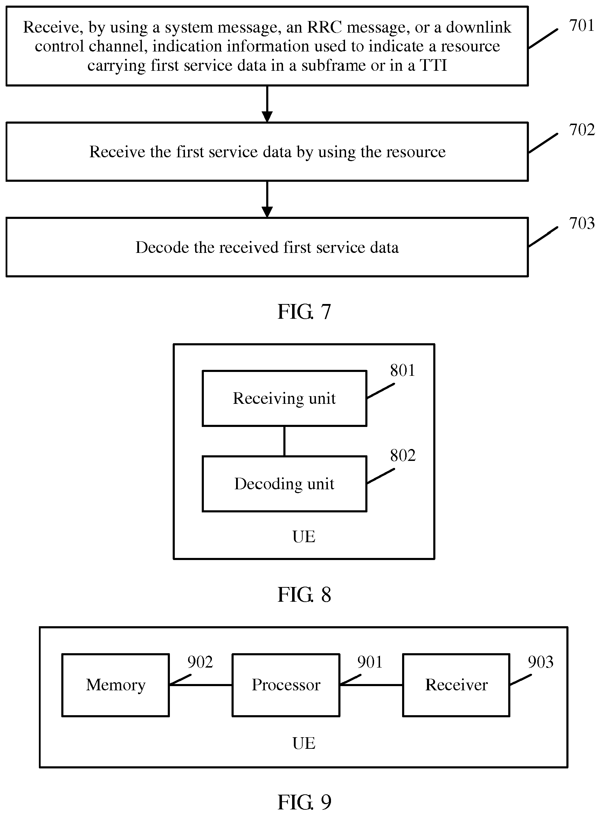

Referring to FIG. 7, FIG. 7 is a schematic flowchart of a data transmission method according to an embodiment of the present invention. The data transmission method is described from the perspective of UE supporting a first service. For detailed descriptions, refer to descriptions in other embodiments. Details are not described herein again. The first service may include an MBB service. As shown in FIG. 7, the data transmission method may include the following steps.

701. Receive, by using a system message, an RRC message, or a downlink control channel, indication information used to indicate a resource carrying first service data in a subframe or in a TTI.

In this embodiment, when a network device needs to send the first service data to the UE, the network device allocates resources to the first service data. The resources may include a first resource that is allowed to be preempted by second service data and a second resource that is not allowed to be preempted by the second service data. After the first resource is preempted by the second service data, before sending the data to the UE, the network device may send, to the UE by using the system message, the RRC message, or the downlink control channel, the indication information used to indicate the resource carrying the first service data in the subframe or in the TTI. Therefore, the UE receives, by using the system message, the RRC message, or the downlink control channel, the indication information used to indicate the resource carrying the first service data in the subframe or in the TTI. The resource may be the second resource, or may be the second resource and a part of the first resource. A second service may include a uMTC service. The subframe or the TTI is used to carry the first service data and the second service data.

702. Receive the first service data by using the resource.

703. Decode the received first service data.

In the data transmission method described in FIG. 7, the UE may receive and decode corresponding data based on indication information, so that data decoding efficiency and UE processing efficiency can be improved.

Referring to FIG. 8, FIG. 8 is a schematic structural diagram of UE according to an embodiment of the present invention. The UE supports a first service, and the first service may include an MBB service. For detailed descriptions, refer to descriptions in other embodiments. Details are not described herein again. As shown in FIG. 8, the UE may include:
a receiving unit 801, configured to receive indication information by using a system message, an RRC message, or a downlink control channel, where the indication information is used to indicate a resource carrying first service data in a subframe or in a TTI, the resource is an RE, an RB, a frequency resource, or a symbol, and the resource is a part of resources allocated by a network device to the first service data, where
the receiving unit 801 is further configured to receive the first service data by using the resource; and
a decoding unit 802, configured to decode the first service data received by the receiving unit 801.

In the UE described in FIG. 8, the UE may receive and decode corresponding data based on indication information, so that data decoding efficiency and UE processing efficiency can be improved.

Referring to FIG. 9, FIG. 9 is a schematic structural diagram of another UE according to an embodiment of the present invention. The UE supports a first service, and the first service may include an MBB service. For detailed descriptions, refer to descriptions in other embodiments. Details are not described herein again. As shown in FIG. 9, the UE may include a processor 901, a memory 902, and a receiver 903.

The receiver 903 is configured to receive indication information by using a system message, an RRC message, or a downlink control channel, where the indication information is used to indicate a resource carrying first service data in a subframe or in a TTI, the resource is an RE, an RB, a frequency resource, or a symbol, and the resource is a part of resources allocated by a network device to the first service data.

The receiver 903 is further configured to: receive the first service data by using the resource, and send the first service data to the processor 901.

The memory 902 stores a group of program code, and the processor 901 is configured to invoke the program code stored in the memory 902 to perform the following operation:
decoding the received first service data.

In the UE described in FIG. 9, the UE may receive and decode corresponding data based on indication information, so that data decoding efficiency and UE processing efficiency can be improved.

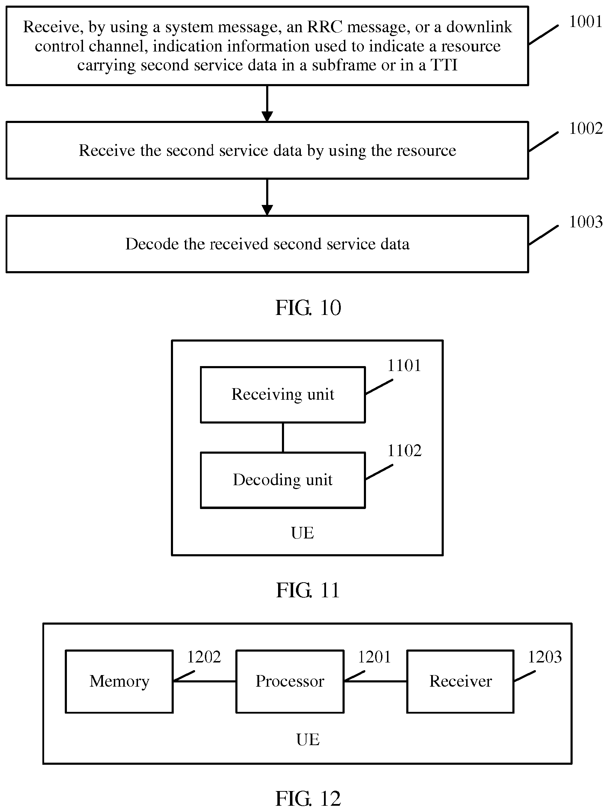

Referring to FIG. 10, FIG. 10 is a schematic flowchart of another data transmission method according to an embodiment of the present invention. The data transmission method is described from the perspective of UE supporting a second service. For detailed descriptions, refer to descriptions in other embodiments. Details are not described herein again. The second service may include a uMTC service. As shown in FIG. 10, the data transmission method may include the following steps.

1001. Receive, by using a system message, an RRC message, or a downlink control channel, indication information used to indicate a resource carrying second service data in a subframe or in a TTI.

In this embodiment, when a network device needs to send first service data to the UE, the network device allocates resources to the first service data. The resources may include a first resource that is allowed to be preempted by the second service data and a second resource that is not allowed to be preempted by the second service data. After the first resource is preempted by the second service data, before sending the data to the UE, the network device may send, to the UE by using the system message, the RRC message, or the downlink control channel, the indication information used to indicate the resource carrying the second service data in the subframe or in the TTI. Therefore, the UE receives, by using the system message, the RRC message, or the downlink control channel, the indication information used to indicate the resource carrying the second service data in the subframe or in the TTI. The resource may be the first resource, or may be a part of the first resource. A first service may include an MBB service. The subframe or the TTI is used to carry the first service data and the second service data.

1002. Receive the second service data by using the resource.

1003. Decode the received second service data.

In the data transmission method described in FIG. 10, the UE may receive and decode corresponding data based on indication information, so that data decoding efficiency and UE processing efficiency can be improved.

Referring to FIG. 11, FIG. 11 is a schematic structural diagram of still another UE according to an embodiment of the present invention. The UE supports a second service, and the second service may include a uMTC service. For detailed descriptions, refer to descriptions in other embodiments. Details are not described herein again. As shown in FIG. 11, the UE may include:
a receiving unit 1101, configured to receive indication information by using a system message, an RRC message, or a downlink control channel, where the indication information is used to indicate a resource carrying second service data in a subframe or in a TTI, the resource is an RE, an RB, a frequency resource, or a symbol, the resource is a resource preempted by the second service data in resources allocated by a network device to first service data, and a first service may include an MBB service, where
the receiving unit 1101 is further configured to receive the second service data by using the resource; and
a decoding unit 1102, configured to decode the second service data received by the receiving unit 1101.

In the UE described in FIG. 11, the UE may receive and decode corresponding data based on indication information, so that data decoding efficiency and UE processing efficiency can be improved.

Referring to FIG. 12, FIG. 12 is a schematic structural diagram of still another UE according to an embodiment of the present invention. The UE supports a second service, and the second service may include a uMTC service. For detailed descriptions, refer to descriptions in other embodiments. Details are not described herein again. As shown in FIG. 12, the UE may include a processor 1201, a memory 1202, and a receiver 1203.

The receiver 1203 is configured to receive indication information by using a system message, an RRC message, or a downlink control channel, where the indication information is used to indicate a resource carrying second service data in a subframe or in a TTI, the resource is an RE, an RB, a frequency resource, or a symbol, the resource is a resource preempted by the second service data in resources allocated by a network device to first service data, and a first service may include an MBB service.

The receiver 1203 is further configured to: receive the second service data by using the resource, and send the second service data to the processor 1201.

The memory 1202 stores a group of program code, and the processor 1201 is configured to invoke the program code stored in the memory 1202 to perform the following operation:
decoding the received first service data.

In the UE described in FIG. 12, the UE may receive and decode corresponding data based on indication information, so that data decoding efficiency and UE processing efficiency can be improved.

The UE in FIG. 8 and FIG. 9 and the UE in FIG. 11 and FIG. 12 may be same UE, or may be different UEs.

In an embodiment, a readable storage medium is provided, and the readable storage medium stores program code used by a network device to perform the resource allocation method corresponding to FIG. 3 in the embodiments of the present invention.

In an embodiment, a readable storage medium is provided, and the readable storage medium stores program code used by UE to perform the data transmission method corresponding to FIG. 7 or FIG. 10 in the embodiments of the present invention.

It may be understood that, the foregoing embodiments may be mutually referenced.

A person of ordinary skill in the art may understand that all or some of the steps of the methods in the embodiments may be implemented by a program instructing relevant hardware. The program may be stored in a computer readable storage medium. The storage medium may include a flash memory, a read-only memory (read-only memory, ROM), a random access memory (random access memory, RAM), a magnetic disk, and an optical disk.

The foregoing provides detailed descriptions of the resource allocation method and the network device disclosed in the embodiments of the present invention. In this specification, specific examples are used to describe the principle and implementations of the present invention, and the description of the embodiments is only intended to help understand the method and core idea of the present invention. In addition, a person of ordinary skill in the art may, based on the idea of the present invention, make modifications with respect to the specific implementations and the application scope. Therefore, the content of this specification shall not be construed as a limitation to the present invention. The invention is defined and limited by the scope of the appended claims.

## Claims

1. A resource allocation method, performed by a network device (101), wherein the method is applied to the network device supporting a first service and a second service, wherein the first service comprises a mobile broadband service, the second service comprises an ultra-reliable and low latency service,
and the method comprises:
allocating resources to to-be-sent first service data, wherein the resources comprise a first resource, the first resource is a resource that is allowed to be preempted by second service data, and the resources comprise resource elements, REs, resource blocks, RBs, frequency resources, or symbols; wherein the resources further comprise a second resource, and the second resource is a resource that is not allowed to be preempted by the second service data; and
the method further comprises:
selecting, from the to-be-sent first service data, a part of data as first data according to a preset rule; and
mapping the first data to the second resource;
wherein selecting, from the to-be-sent first service data, a part of data as first data according to a preset rule, is to select a part of data on a system bit or an important information bit from the to-be-sent first service data as the first data;
wherein the method further comprises:
mapping to-be-sent second service data to the first resource; and
sending the to-be-sent second service data by using the first resource;
wherein before the selecting, from the to-be-sent first service data, a part of data as first data according to a preset rule, the method further comprises:
dividing the to-be-sent first service data into M blocks, wherein M is an integer greater than 1; and
for each block, performing encoding processing on the block, and performing rate matching on the encoded block;
wherein the selecting, from the to-be-sent first service data, a part of data as first data according to a preset rule comprises:
for each block, selecting, from the rate-matched block, a part of data as second data according to the preset rule; and
cascading M pieces of second data into the first data in order of the to-be-sent first service data;
wherein the selecting, from the rate-matched block, a part of data as second data according to the preset rule comprises:
obtaining a capacity of the second resource;
dividing the capacity of the second resource by M, to obtain a first length; and
for each rate-matched block, determining, as the second data, a part of data that is in the block and whose length is the first length.

2. The method according to claim 1, wherein the method further comprises:
sending indication information by using a system message, a radio resource control, RRC, message, or a downlink control channel, wherein the indication information is used to indicate a resource that is in a subframe or in a transmission time interval, TTI, and that belongs to the first resource, wherein
the subframe or the TTI is used to carry the to-be-sent first service data.

3. A computer program product or computer-readable storage medium, comprising instructions which, when executed by a computer, cause the computer to carry out the method of any one of claims 1 to 2.

4. A communication apparatus, configured to perform the method according to any one of claims 1 to 2.

## Patentansprüche

1. Ressourcenzuweisungsverfahren, das von einem Netzwerkgerät (101) durchgeführt wird, wobei das Verfahren auf das Netzwerkgerät angewendet wird, das einen ersten Dienst und einen zweiten Dienst unterstützt, wobei der erste Dienst einen mobilen Breitbanddienst umfasst, der zweite Dienst einen äußerst zuverlässigen und latenzarmen Dienst umfasst und wobei das Verfahren Folgendes umfasst:
Zuweisen von Ressourcen zu zu sendenden ersten Dienstdaten, wobei die Ressourcen eine erste Ressource umfassen, die erste Ressource eine Ressource ist, die durch zweite Dienstdaten vorweggenommen werden darf, und wobei die Ressourcen Ressourcenelemente, REs, Ressourcenblöcke, RBs, Frequenzressourcen oder Symbole umfassen;
wobei die Ressourcen ferner eine zweite Ressource umfassen und die zweite Ressource eine Ressource ist, die nicht durch die zweiten Dienstdaten vorweggenommen werden darf; und
wobei das Verfahren ferner Folgendes umfasst:
Auswählen, aus den zu sendenden Daten des ersten Dienstes, eines Teils der Daten als erste Daten gemäß einer voreingestellten Regel; und
Zuordnen der ersten Daten zur zweiten Ressource;
wobei das Auswählen eines Teils der Daten aus den zu sendenden ersten Dienstdaten als erste Daten gemäß einer voreingestellten Regel darin besteht, einen Teil der Daten auf einem Systembit oder einem wichtigen Informationsbit aus den zu sendenden ersten Dienstdaten als die ersten Daten auszuwählen;
wobei das Verfahren ferner Folgendes umfasst:
Zuordnen der zu sendenden zweiten Dienstdaten zur ersten Ressource; und
Senden der zu sendenden zweiten Dienstdaten unter Verwendung der ersten Ressource;
wobei das Verfahren vor dem Auswählen eines Teils der Daten aus den zu sendenden ersten Dienstdaten als erste Daten gemäß einer voreingestellten Regel ferner Folgendes umfasst:
Unterteilen der zu sendenden ersten Dienstdaten in M Blöcke, wobei M eine ganze Zahl größer als 1 ist; und
für jeden Block, Durchführen der Codierungsverarbeitung auf dem Block und Durchführen der Ratenanpassung auf dem codierten Block;
wobei das Auswählen eines Teils der Daten aus den zu sendenden Daten des ersten Dienstes als erste Daten gemäß einer voreingestellten Regel Folgendes umfasst:
für jeden Block, Auswählen, aus dem ratenangepassten Block, eines Teils der Daten als zweite Daten gemäß der voreingestellten Regel; und
Kaskadieren von M Anzahl von zweiten Daten in die ersten Daten in der Reihenfolge der zu sendenden ersten Dienstdaten;
wobei das Auswählen eines Teils der Daten aus dem ratenangepassten Block als zweite Daten gemäß der voreingestellten Regel Folgendes umfasst:
Erhalten einer Kapazität der zweiten Ressource;
Teilen der Kapazität der zweiten Ressource durch M, um eine erste Länge zu erhalten; und
für jeden ratenangepassten Block, Bestimmen eines Teils der Daten, die sich im Block befinden und deren Länge der ersten Länge entspricht, als zweite Daten.

2. Verfahren nach Anspruch 1, wobei das Verfahren ferner Folgendes umfasst:
Senden von Anzeigeinformationen unter Verwendung einer Systemnachricht, einer Funkressourcensteuerungs-, RRC, -Nachricht oder eines Downlink-Steuerkanals, wobei die Hinweisinformationen verwendet werden, um eine Ressource anzuzeigen, die sich in einem Unterrahmen oder in einem Übertragungszeitintervall, TTI, befindet und die zu der ersten Ressource gehört, wobei der Unterrahmen oder das TTI verwendet wird, um die zu sendenden ersten Dienstdaten zu übertragen.

3. Computerprogrammprodukt oder computerlesbares Speichermedium, umfassend Befehle, die bei ihrer Ausführung durch einen Computer bewirken, dass der Computer das Verfahren nach einem der Ansprüche 1 bis 2 ausführt.

4. Kommunikationsvorrichtung, die konfiguriert ist, um das Verfahren nach einem der Ansprüche 1 bis 2 durchzuführen.

## Revendications

1. Procédé d'attribution de ressources, exécuté par un dispositif réseau (101), dans lequel le procédé est appliqué au dispositif réseau prenant en charge un premier service et un second service, dans lequel le premier service comprend un service mobile à large bande, le second service comprend un service à faible latence ultra-fiable,
et le procédé comprend :
l'attribution des ressources aux données de premier service à envoyer, dans lequel les ressources comprennent une première ressource, la première ressource est une ressource autorisée à être préemptée par les données de second service, et les ressources comprennent des éléments de ressource, RE, des blocs de ressources, RB, des ressources de fréquence, ou des symboles ; dans lequel les ressources comprennent en outre une seconde ressource, et la seconde ressource est une ressource qui n'est pas autorisée à être préemptée par les données de second service ; et
le procédé comprend en outre :
la sélection, parmi les données de premier service à envoyer, d'une partie de données en tant que premières données selon une règle prédéfinie ; et
le mappage des premières données à la seconde ressource ;
dans lequel la sélection, parmi les données de premier service à envoyer, d'une partie de données en tant que premières données selon une règle prédéfinie, consiste à sélectionner une partie de données sur un bit système ou un bit d'information important à partir des données de premier service à envoyer en tant que premières données ;
dans lequel le procédé comprend en outre :
le mappage des données de second service à envoyer à la première ressource ; et
l'envoi des données de second service à envoyer au moyen de la première ressource ;
dans lequel avant la sélection, parmi les données de premier service à envoyer, d'une partie de données en tant que premières données selon une règle prédéfinie, le procédé comprend en outre :
la division des données de premier service à envoyer en M blocs, M représentant un entier supérieur à 1 ; et
pour chaque bloc, la réalisation d'un traitement d'encodage sur le bloc ainsi que la réalisation d'une correspondance de débit sur le bloc encodé ;
dans lequel la sélection, parmi les données de premier service à envoyer, d'une partie de données en tant que premières données selon une règle prédéfinie comprend :
pour chaque bloc, la sélection, à partir du bloc à débit adapté, d'une partie de données en tant que secondes données selon la règle prédéfinie ; et
la mise en cascade de M éléments de secondes données dans les premières données dans l'ordre des données de premier service à envoyer ;
dans lequel la sélection, à partir du bloc à débit adapté, d'une partie de données en tant que secondes données selon la règle prédéfinie comprend :
l'obtention d'une capacité de la seconde ressource ;
la division de la capacité de la seconde ressource par M, afin d'obtenir une première longueur ; et
pour chaque bloc à débit adapté, la détermination, en tant que secondes données, d'une partie de données qui se trouve dans le bloc et dont la longueur constitue la première longueur.

2. Procédé selon la revendication 1, dans lequel le procédé comprend en outre :
l'envoi des informations d'indication au moyen d'un message système, d'un message de commande de ressources radio, RRC, ou d'un canal de commande de liaison descendante, dans lequel les informations d'indication sont utilisées pour indiquer une ressource qui se trouve dans une sous-trame ou dans un intervalle de temps de transmission, TTI, et qui appartient à la première ressource, dans lequel
la sous-trame ou le TTI est utilisé(e) pour transporter les données de premier service à envoyer.

3. Produit de programme informatique ou support de stockage lisible par ordinateur, comprenant des instructions qui, lorsqu'elles sont exécutées par un ordinateur, amènent l'ordinateur à exécuter le procédé selon l'une quelconque des revendications 1 à 2.

4. Appareil de communication, configuré pour exécuter le procédé selon l'une quelconque des revendications 1 à 2.
